**Europäisches Patentamt**

(19) **European Patent Office**

**Office européen des brevets**

(11) Veröffentlichungsnummer : **0 060 860**
**B1**

(12) # EUROPÄISCHE PATENTSCHRIFT

(45) Veröffentlichungstag der Patentschrift :
**15.08.84**

(51) Int. Cl.³ : **F 22 D 11/06**

(21) Anmeldenummer : **81902650.1**

(22) Anmeldetag : **21.09.81**

(86) Internationale Anmeldenummer :
**PCT/DE 81/00150**

(87) Internationale Veröffentlichungsnummer :
**WO/8201237 (15.04.82 Gazette 82/10)**

(54) **FERNDAMPFSYSTEM MIT GEMEINSAMER KONDENSATRÜCKFÜHRUNG, UND VERFAHREN ZUR KONDENSAT-RÜCKFÜHRUNG.**

(30) Priorität : **02.10.80 DE 3037293**

(43) Veröffentlichungstag der Anmeldung :
**29.09.82 Patentblatt 82/39**

(45) Bekanntmachung des Hinweises auf die Patenter-teilung : **15.08.84 Patentblatt 84/33**

(84) Benannte Vertragsstaaten :
**AT CH FR GB LI NL SE**

(56) Entgegenhaltungen :
**DE-C-  374 275**
**FR-A- 2 415 263**
**GB-A-  762 146**
**US-A- 3 813 037**
**US-A- 3 972 196**

(73) Patentinhaber : **Bälz, Helmut**
**Koepffstrasse 5**
**D-7100 Heilbronn (DE)**

(72) Erfinder : **Bälz, Helmut**
**Koepffstrasse 5**
**D-7100 Heilbronn (DE)**

(74) Vertreter : **Rüger, Rudolf, Dr.-Ing.**
**Webergasse 3 Postfach 348**
**D-7300 Esslingen/Neckar (DE)**

**Beschreibung**

Die Erfindung geht aus von einem Verfahren zur Kondensatrückführung von wenigstens zwei Kondensatströmen mit unterschiedlichem Druck und unterschiedlicher Temperatur in einem geschlossenen Kreislauf eines Ferndampfsystems, mit einer Hochdruckdampffernleitung, wobei die Kondensatströme vor dem Eintritt in die Kondensatrückführungsleitung miteinander gemischt werden und der Druck und die Temperatur in der Kondensatrückführungsleitung zwischen den Drücken und den Temperaturen der Kondensatströme liegen. Ferner betrifft die Erfindung ein Ferndampfsystem mit gemeinsamer Kondensatrückführung von wenigstens zwei Kondensatströmen mit unterschiedlichem Druck und unterschiedlicher Temperatur in einer gemeinsamen Kondensatrückführungsleitung und mit einer Hochdruckdampffernleitung.

Bei Ferndampfsystemen mit Wärmeverbrauchern, die mit unterschiedlichen Temperaturen und Drücken arbeiten, ergeben sich vielfach Probleme bei der Kondensatrückführung, wobei es anzustreben ist, daß für die Kondensatrückführung von allen Verbrauchern eine gemeinsame Sammel- oder Hauptleitung verwendet wird. Die unterschiedlichen Drücke und die davon abhängigen unterschiedlichen Siedetemperaturen führen jedoch bei einer gemeinsamen Kondensatleitung zu Rückstau und Ausdampfungen sowie Kondensatschlägen, was insgesamt unerwünscht ist und die Arbeitsweise des Ferndampfsystems beeinträchtigt.

In der Praxis ist es deshalb bekannt, Einrichtungen für den Temperaturausgleich der einzelnen Kondensatströme vorzusehen, wofür Kondensatkühler oder Einspritzkühler verwendet werden, die unter Umständen gleichzeitig auch für eine mögliche Wärmerückgewinnung geeignet sind.

Aus der GB-A-762 146 ist ein Dampfkreislauf mit Rückgewinnung des heißen Kondensats bekannt, bei dem der Dampf eines Dampferzeugers unterschiedlichen Verbrauchern zugeführt wird, in denen jeweils Kondensat mit unterschiedlichem Druck und unterschiedlicher Temperatur anfällt. Entsprechend dem Druck und der Temperatur wird das Kondensat in voneinander getrennten Kondensatsammelrohren aufgesammelt, die über Rückschlagventile an einen jeweils zugehörigen Kondensatsammelbehälter angeschlossen sind. Der Kondensatsammelbehälter, in dem das Kondensat mit dem höchsten Druck und der höchsten Temperatur anfällt, ist unmittelbar an eine Kondensatrückführungsleitung zu dem Dampferzeuger angeschlossen und wird sowohl über das zugehörige Kondensatsammelrohr als auch den Kondensatsammelbehälter gespeist, in dem Kondensat mit niedrigerem Druck angesammelt wird. Zum Überführen des Kondensats mit dem niedrigeren Druck in den Behälter mit Kondensat mit höherem Druck ist eine Pumpe vorgesehen, deren Antriebsenergie nicht aus dem Kondensat mit dem höchsten Druck stammt.

Darüber hinaus ist bei dem bekannten Dampfkreislauf der apparative Aufwand zum Aufsammeln und Vermischen der Kondensatströme infolge der Verwendung von einzelnen Sammelbehältern, in denen die Kondensatströme vor dem Einspeisen in die gemeinsame Kondensatrückführungsleitung gemischt werden, verhältnismäßig groß.

Aufgabe der Erfindung ist es deshalb, ein Verfahren zu schaffen, bei dem Kondensatströme unterschiedlichen Drucks und unterschiedlicher Temperatur ohne fremde Hilfsenergie und ohne Energieverlust in eine gemeinsame Kondensatrückführungsleitung eingespeist werden können. Ferner ist es Aufgabe der Erfindung, ein Ferndampfsystem zu schaffen, bei dem ohne fremde Hilfsenergie und ohne unnötigen Energieverlust Kondensatströme mit unterschiedlichem Druck und unterschiedlicher Temperatur in eine gemeinsame Kondensatrückführungsleitung eingespeist werden.

Zur Lösung dieser Aufgabe ist das erfindungsgemäße Verfahren durch die Merkmale des Hauptanspruches und das erfindungsgemäße Ferndampfsystem durch die Merkmale des Unteranspruches 6 gekennzeichnet. Das Verfahren wird sehr einfach und das Ferndampfsystem weitgehend wartungsfrei, wenn zum Fördern und Mischen der unterschiedlichen Kondensatströme eine Strahlpumpe verwendet wird.

Um förderndes Kondensat mit ausreichendem Druck und ausreichender Menge zu erhalten, kann gemäß dem Verfahren als förderndes Kondensat das in einem Behälter aufgesammelte Entwässerungskondensat aus der Hochdruckdampffernleitung verwendet werden, während bei dem Ferndampfsystem an die Hochdruckdampffernleitung ein Behälter zum Aufsammeln des Entwässerungskondensats angeschlossen ist, mit dem die Antriebseinrichtung der Fördereinrichtung verbunden ist.

Je nach der Austrittstemperatur der Mischeinrichtung kann es zweckmäßig sein, die Temperatur der miteinander gemischten Kondensatströme weiter an die Temperatur in der Kondensatrückführungsleitung anzupassen, wozu in dem Ferndampfsystem ein Wärmetauscher vorgesehen ist, der strömungsmäßig vor der Fördereinrichtung angeordnet ist.

Wenn ein weiterer Kondensatstrom anfällt, dessen Druck und Temperatur niedriger liegen als der Druck und die Temperatur des aus der Mischeinrichtung austretenden Kondensatstromes, kann der weitere Kondensatstrom durch den aus der Mischeinrichtung austretenden Kondensatstrom mit einer ähnlichen Förder- und Mischeinrichtung in die Kondensatrückführungsleitung gefördert werden.

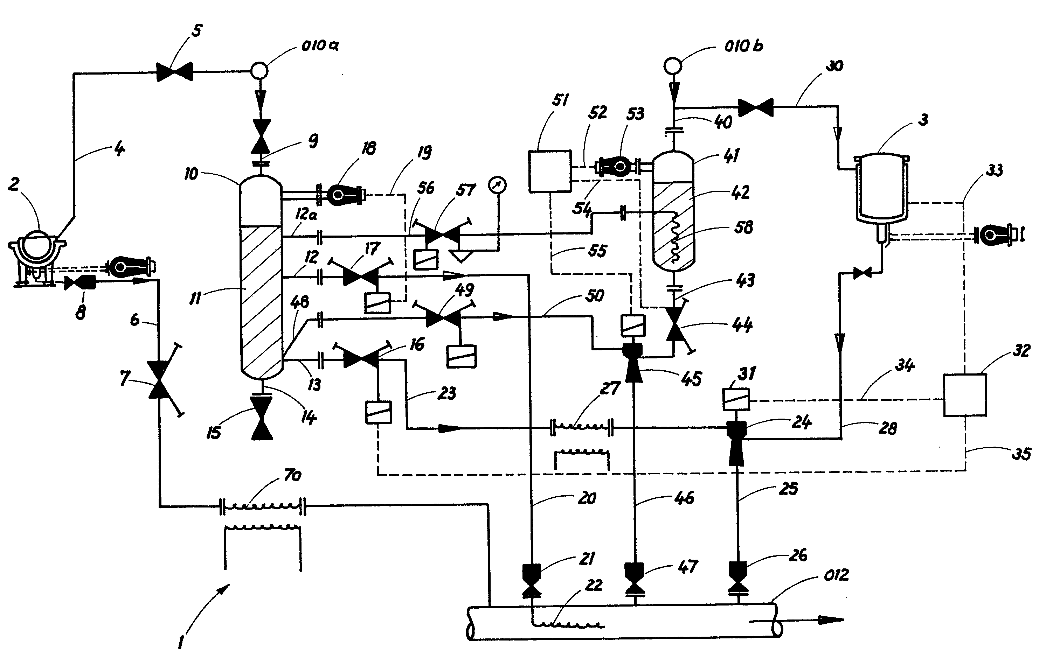

In der einzigen Figur der Zeichnung ist ein Ferndampfsystem gemäß der Erfindung schematisch im Ausschnitt dargestellt.

Das veranschaulichte geschlossene Ferndampfsystem 1, mit dem zwei schematisch dargestellte Wärmeverbraucher 2 und 3 mit Dampfwärme versogt werden, enthält eine Hochdruckdampffernleitung 010a, eine Niederdruckdampffernleitung 010b und eine Kondensatrückführungsleitung 012, die die anfallenden Kondensatströme der beiden mit unterschiedlichem Dampfdruck arbeitenden Wärmeverbraucher 2 und 3 zu einem nicht veranschaulichten Heizwerk zurückleitet. Hierbei ist beispielsweise der Wärmeverbraucher 2 eine Mangel, und der Wärmeverbraucher 3 ist ein Kochkessel und befindet sich in einer Küche.

Der Wärmeverbraucher 2 ist über eine Dampfleitung 4 und ein Absperrventil 5 an die Hochdruckdampffernleitung 010a angeschlossen, während das in dem Wärmeverbraucher 2 anfallende Kondensat über eine Kondensatleitung 6 und ein in der Kondensatleitung 6 angeordnetes Kondensatableitungsventil 7 sowie ein Rückschlagventil 8 in die Kondensatrückführungsleitung 012 eingespeist wird, in der ein mittlerer Druck durch nicht weiter veranschaulichte Druckhalteventile aufrechterhalten ist. Zur besseren Wärmeausnutzung bzw. zum Temperaturangleich kann in der Kondensatleitung 6 ein Wärmetauscher 70 angeordnet sein.

Zur Entwässerung der Hochdruckdampffernleitung 010a ist ferner eine Leitung 9 angeschlossen, die zu einem Druckspeicher 10 führt, in dem unter hohem Druck stehendes Kondensat 11 aus der Hochdruckdampffernleitung 010a aufgesammelt wird. Der Druckbehälter 10 weist insgesamt vier weitere Anschlußstutzen 12, 12a, 13 und 14 auf, von denen der Anschlußstutzen 14 mit einem Entwässerungsventil 15, der Anschlußstutzen 13 mit einem magnetisch gesteuerten Kondensatableitungsventil 16 und der Anschlußstutzen 12 ebenfalls mit einem Kondensatableitungsventil 17 verbunden ist. Hierbei mündet der Anschlußstutzen 12 in einem beliebigen Bereich unterhalb des maximalen Kondensatfüllstandes in den Druckbehälter 10, während der Anschlußstutzen 13 möglichst weit unten in den Druckbehälter 10 einmündet. An dem oberen Ende des Druckbehälters 10 sitzt ein Niveaugeber 18, der beim Überschreiten einer vorgegebenen Kondensatfüllhöhe in dem Druckbehälter 10 über eine elektrische Steuerleitung 19 das Kondensatableitungsventil 17 öffnet, an das eine Kondensatleitung 20 angeschlossen ist, die über ein entsprechendes Rückschlagventil 21 in die als Sammelschiene dienende Kondensatrückführungsleitung 012 mündet. Da das Kondensat 11, das über die Kondensatleitung 20 gegebenenfalls in die Kondensatrückführungsleitung 012 eingespeist wird, eine verhältnismäßig hohe Temperatur aufweist, ist, um Kondensatschläge zu vermeiden, in der Kondensatrückführungsleitung 012 ein Einspritzkühler 22 angeordnet, an dem die Kondensatleitung 20 angeschlossen ist, falls nicht in der Kondensatleitung 20 ein Wärmetauscher (nicht dargestellt) vorgesehen ist.

Das Kondensatableitungsventil 16 ist auslaßseitig über eine Kondensatleitung 23 mit der Treibdüse einer verstellbaren Strahlpumpe 24 verbunden, die auslaßseitig an eine Leitung 25 angeschlossen ist. Die Leitung 25 führt das aus der Treibdüse 24 austretende Kondensat über ein Rückschlagventil 26 in die Kondensatrückführungsleitung 012. Je nach der Temperatur des über die Leitung 23 eingespeisten Kondensats kann in der Leitung 23 ein Wärmetauscher oder Kühler 27 vorgesehen sein, so daß eine Temperaturangleichung stattfindet, damit das aus der Strahlpumpe 24 austretende Kondensat an die Temperatur in der Kondensatrückfürungsleitung 012 angepaßt ist.

Die Saugseite der Strahlpumpe 24 führt über eine Kondensatleitung 28 zu dem Kondensatanschluß des Wärmeverbrauchers 3, der über eine Dampfleitung 30 an die Niederdruckferndampfleitung 010b angeschlossen ist.

Zur Steuerung der Antriebseinrichtung 31 der Strahlpumpe 24 ist eine Steuerschaltung 32 vorgesehen, die die Betriebsparameter des in dem Wärmeverbraucher 3 anfallenden Kondensats über entsprechende, nicht dargestellte Meßfühler und entsprechende Meßleitungen 33 erfaßt und entsprechend die Treibdüse der Strahlpumpe 24 bzw. das Kondensatableitventil 16 steuert. Hierzu sind die beiden letztgenannten Stellglieder über elektrische Verbindungsleitungen 34 und 35 mit der Steuerschaltung 32 verbunden. Welche der Betriebsparameter des in dem Wärmeverbraucher 3 anfallenden Kondensats, wie Druck, Temperatur und Kondensatmenge pro Zeiteinheit zweckmäßigerweise erfaßt werden, hängt von dem jeweiligen Wärmeverbraucher 3 und dessen thermischem bzw. dynamischem Verhalten ab.

Um das Entwässerungskondensat aus der Niederdruckferndampfleitung 010b aufzusammeln, ist an diese über eine Leitung 40 ein Kondensatgefäß 41 angeschlossen. Zum Abführen des aufgesammelten Entwasserungskondensats 42 ist an den Kondensatbehälter 41 eine Leitung 43 angeschlossen, die über ein Kondensatableitungsventil 40 in die Saugseite einer weiteren verstellbaren Strahlpumpe 45 mündet. Auslaßseitig ist die verstellbare Strahlpumpe 45 über eine Leitung 46 und ein Rückschlagventil 47 an die gemeinsame Kondensatrückführungsleitung 012 angeschlossen.

Wie bei der verstellbaren Strahlpumpe 24 ist das Treibmedium für die verstellbare Strahlpumpe 45 ebenfalls das in dem Druckspeicher 10 aufgesammelte Kondensat 11, wobei der Druckspeicher 10 hierzu über einen weiteren Anschlußstutzen 48, ein Kondensatableitungsventil 49 und eine Kondensatleitung 50 mit der Treibdüse der verstellbaren Strahlpumpe 45 verbunden ist. Zur Regelung der Strahlpumpe 45 und des Kondensatableitungsventils 44 ist eine Steuerschaltung 51 vorhanden, die über eine Steuerleitung 52 mit dem an dem Kondensatbehälter 41 angeordneten Niveaugeber 53 verbunden, während die weiteren Steuerleitungen 54 und 55 zu dem Kondensatableitungsventil 44 bzw. zu der Verstelleinrichtung der Strahlpumpe 45 führen.

Anstatt das überschüssige Entwässerungskondensat aus der Hochdruckdampffernleitung 010a unmittelbar über die Leitung 20 und den Einspritzkühler 22 in die gemeinsame Kondensatrückführungsleitung 012 einzuspeisen, kann auch ein Anschlußstutzen 12a an dem Druckbehälter 10 angeordnet sein, von dem aus eine Kondensatleitung 56 über entsprechende Druckarmaturen 57 zu einem in dem Kondensatbehälter 41 angeordneten Einspritzkühler 58 führt.

Beim Betrieb des Ferndampfsystems 1 und der angeschlossenen Wärmeverbraucher 2 und 3 wird über die Dampfleitung 4 Hochdruckdampf aus der Hochdruckdampffernleitung 010a in den Wärmeverbraucher 2 eingespeist, in dem der Dampf kondensiert, wobei der anfallende Kondensatstrom noch einen verhältnismäßig hohen Druck und eine relativ hohe Temperatur aufweist. Der aus dem Wärmeverbraucher 2 austretende Kondensatstrom wird über die Kondensatleitung 6 unmittelbar in die gemeinsame Kondensatrückführungsleitung 012 des als geschlossener Kreislauf arbeitenden Ferndampfsystems eingespeist, da der Druck und die Temperatur in der gemeinsamen Kondensatrückführungsleitung 012 so gewählt ist, daß bei der Einleitung des Kondensatstromes über die Kondensatleitung 6 weder Kondensatrückstau noch Ausgasungen oder Kondensatschläge auftreten.

Das beim Betrieb des Ferndampfsystems 1 auftretende unter hohem Druck stehende Entwässerungskondensat aus der Hochdruckdampffernleitung 010a wird über die Kondensatleitung 9 dem Druckbehälter 10 zugeführt und aufgesammelt. Wenn hierbei die in dem Druckbehälter 10 aufgesammelte Menge des Entwässerungskondensats 11 ein vorgegebenes maximales Niveau überschreitet, spricht der Niveaugeber 18 an und öffnet das Kondensatableitungsventil 17, so daß das überschüssige unter hohem Druck stehende Entwässerungskondensat nach einer Druckminderung, beispielsweise in dem Kondensatableitungsventil 17, dem Einspritzkühler 22 zugeführt wird, von wo aus es dem Kondensat in der Kondensatrückführungsleitung 012 beigemischt wird.

Alternativ oder zusätzlich ist es auch möglich, das überschüssige in dem Druckbehälter 10 angesammelte Kondensat über die Druckminderungsapparatur 57 und die Leitung 56 in den Einspritzkühler 58 des an die Niederdruckferndampfleitung 010b angeschlossenen Kondensatbehälters 41 über den Einspritzkühler 58 abzuleiten.

Je nach anfallender Menge des Entwässerungskondensats kann unter Umständen in der Kondensatleitung 20 ein Wärmetauscher vorgesehen sein, um die überschüssige Wärme des aus dem Druckbehälter 10 kommenden Kondensats abzuführen oder zu nutzen. In jedem Fall wird sichergestellt, daß das aus dem Druckbehälter 10 stammende Kondensat vor der Einleitung in die Kondensatrückführungsleitung 012 an die dort herrschende Temperatur und den dort herrschenden Druck angeglichen wird.

In dem Wärmeverbraucher 3, der an die Niederdruckdampffernleitung 010b angeschlossen ist, fällt ebenfalls Kondensat an, das über die Kondensatleitung 28 abgeführt wird. Der in dem Wärmeverbraucher 3 auftretende Kondensatstrom weist jedoch einen Druck und eine Temperatur auf, die unter Umständen erheblich unter dem Druck und der Temperatur in der Kondensatrückführungsleitung 012 liegen, so daß eine unmittelbare Ableitung in die Kondensatrückführungsleitung 012 nicht möglich ist. Der anfallende Kondensatstrom wird deshalb der Saugseite der Strahlpumpe 24 zugeführt, die diesen unter einem niedrigen Druck stehenden Kondensatstrom über die Leitung 25 in die gemeinsame Kondensatrückführungsleitung 012 fördert. Als Treibmittel für die Strahlpumpe 24 und damit für den unter niedrigem Druck stehenden Kondensatstrom aus der Kondensatleitung 28 dient das in dem Druckbehälter 10 aufgesammelte und unter hohem Druck und relativ hoher Temperatur stehende Entwässerungskondensat aus der Hochdruckdampffernleitung 010a, das über das Ableitungsventil 16 der Treibdüse der Strahlpumpe 24 zugeführt wird.

Die Steuerschaltung 32 steuert hierbei entsprechend den Betriebsparametern des Kondensatstroms in der Kondensatleitung 28 die Antriebseinrichtung 31 der Strahlpumpe 24 bzw. gegebenenfalls das Ableitungsventil 16 derart, daß am Ausgang der Strahlpumpe 24 ein Kondensatstrom in der Kondensatleitung 25 entsteht, dessen Druck und Temperatur an den Druck und die Temperatur in der Kondensatrückführungsleitung 012 angepaßt ist. Die Strahlpumpe 24 arbeitet hierbei als Fördereinrichtung, um den Kondensatstrom aus der Kondensatleitung 28 gegen den höheren Druck in der Kondensatrückführungsleitung 012 zu fördern und außerdem wirkt die Strahlpumpe 24 als Mischeinrichtung, um den Kondensatstrom mit der verhältnismäßig niedrigen Temperatur aus der Kondensatleitung 28 mit dem Kondensatstrom mit relativ hoher Temperatur aus der Kondensatleitung 23 zu mischen, so daß eine Temperatur entsteht, die zwischen der Temperatur der beiden Kondensatströme liegt und etwa im Bereich der Temperatur in der Kondensatrückführungsleitung 012 liegt.

Wenn bei allen Betriebssituationen eine Temperatur der miteinander gemischten Kondensatströme aus den Kondensatleitungen 28 und 23 eingehalten werden kann, die nicht zu Ausdampfungen oder Kondensatschlägen in der gemeinsamen Kondensatrückführungsleitung 012 führen, kann der aus der Strahlpumpe 24 austretende gemischte Kondensatstrom unmittelbar in die Kondensatrückführungsleitung 012 eingeleitet werden. Besteht hingegen die Möglichkeit, daß die Temperatur zu sehr von der Temperatur in der Kondensatrückführungsleitung 012 abweicht, so kann zweckmäßigerweise mittels des Kühlers 27 in der Kondensatleitung 23 eine Temperaturverringerung erfolgen, damit das aus der Strahlpumpe 24 austretende Kondensatgemisch weiter an die Temperatur in der Kondensatrückführungsleitung 012 angepaßt ist.

Durch die Verwendung der Strahlpumpe 24 und des Druckbehälters 10 zusammen mit der Steuerschaltung 32 ergibt sich der Vorteil, daß ohne die Verwendung von zusätzlichen Hilfsenergien der aus dem Wärmeverbraucher 3 kommende Kondensatstrom mit bezogen auf den aus dem Wärmeverbraucher 2 austretenden Kondensatstrom mit relativ niedrigem Druck und relativ niedriger Temperatur in eine gemeinsame Kondensatrückführungsleitung 012 eingespeist werden kann.

Um die Niederdruckdampffernleitung 010b zu entwässern, ist über die Leitung 40 der Kondensatsammelbehälter 41 angeschlossen, dessen darin aufgesammeltes Kondensat 42 unter einem verhältnismäßig niedrigen Druck steht, so daß es nicht ohne weiteres in die Kondensatrückführungsleitung 012 eingespeist werden kann. Zur Druckerhöhung dient die weitere verstellbare Strahlpumpe 45, die ebenfalls mit Treibenergie aus dem Druckbehälter 10, d. h. mit dem dort befindlichen Entwässerungskondensat 11 betrieben wird. Falls das Kondensat 42 in dem Kondensatsammelbehälter 41 ein vorgegebenes Niveau überschreitet, spricht der Niveaugeber 53 an, so daß die Steuerschaltung 51 entsprechend das Kondensatableitungsventil 44 öffnet und die verstellbare Strahlpumpe 45 verstellt, damit das unter einem verhältnismäßig niedrigen Druck stehende Kondensat 42 in die gemeinsame Kondensatrückführungsleitung 012 eingespeist werden kann.

Je nach Auslegung des Ferndampfsystems 1 besteht auch die Möglichkeit, mit dem aus der Strahlpumpe 24 austretenden Kondensatstrom eine weitere Strahlpumpe zu betreiben, die mit der Strahlpumpe 24 in Kaskade geschaltet ist, um auf diese Weise den vorhandenen Druck am Ausgang der ersten Strahlpumpe weiter abzubauen und zum Fördern eines weiteren Kondensatstromes aus einem zusätzlichen Wärmeverbraucher zu verwenden, dessen austretenden Kondensatstrom einen noch niedrigeren Druck und eine noch niedrigere Temperatur aufweist.

Im übrigen besteht die Möglichkeit, in jeder der Kondensatleitungen Wärmeübertrager vorzusehen, um die Kondensatwärme weiter auszunutzen.

**Ansprüche**

1. Verfahren zur Kondensatrückführung von wenigstens zwei Kondensatströmen mit unterschiedlichem Druck und unterschiedlicher Temperatur in einem geschlossenen Kreislauf eines Ferndampfsystems (1), mit einer Hochdruckdampffernleitung (010a), wobei die Kondensatströme vor dem Eintritt in die Kondensatrückführungsleitung (012) miteinander gemischt werden und der Druck und die Temperatur in der Kondensatrückführungsleitung zwischen den Drücken und den Temperaturen der Kondensatströme liegen, dadurch gekennzeichnet, daß mit dem Kondensatstrom mit dem höheren Druck der Kondensatstrom mit dem niedrigeren Druck in die Kondensatrückführungsleitung (012) gefördert wird.

2. Verfahren nach Anspruch 1, dadurch gekennzeichnet, daß zum Fördern und Mischen eine Strahlpumpe (24) verwendet wird.

3. Verfahren nach Anspruch 1, dadurch gekennzeichnet, daß als förderndes Kondensat das in einem Druchbehälter (10) aufgesammelte Entwässerungskondensat (11) aus der Hochdruckdampffernleitung (010a) verwendet wird.

4. Verfahren nach Anspruch 1, dadurch gekennzeichnet, daß der Druck und/oder die Temperatur der miteinander gemischten Kondensatströme weiter an den Druck und/oder die Temperatur in der Kondensatrückführungsleitung (012) angepaßt werden.

5. Verfahren nach Anspruch 1, dadurch gekennzeichnet, daß der nach dem Mischen entstandene Kondensatstrom dazu verwendet wird, einen weiteren Kondensatstrom mit niedrigerem Druck zu fördern.

6. Ferndampfsystem mit gemeinsamer Kondensatrückführung von wenigstens zwei Kondensatströmen mit unterschiedlichem Druck und unterschiedlicher Temperatur in einer gemeinsamen Kondensatrückführungsleitung (012), sowie mit einer Mischeinrichtung (24), in der die Kondensatströme vor dem Eintritt in die Kondensatrückführungsleitung (012) gemischt werden, und mit einer Hochdruckdampffernleitung (010a), dadurch gekennzeichnet, daß die Mischeinrichtung (24) mit einer von dem Kondensatstrom mit dem höheren Druck angetriebenen Fördereinrichtung verbunden ist, die den Kondensatstrom mit niedrigerem Druck in die Kondensatrückführungsleitung (012) gegen den dort herrschenden Druck fördet, und daß in der Mischeinrichtung (24) der geförderte Kondensatstrom mit dem aus der Fördereinrichtung austretenden Kondensatstrom gemischt wird.

7. Ferndampfsystem nach Anspruch 6, dadurch gekennzeichnet, daß die Förder- und Mischeinrichtung eine Strahlpumpe (24) ist.

8. Ferndampfsystem nach Anspruch 7, dadurch gekennzeichnet, daß die Strahlpumpe (24) verstellbar ist.

9. Ferndampfsystem nach Anspruch 6, dadurch gekennzeichnet, daß an die Hochdruckdampffernleitung (010a) ein Druckbehälter (10) zum Aufsammeln des Entwässerungskondensats (11) angeschlossen ist, mit dem die Antriebseinrichtung der Fördereinrichtung verbunden ist.

10. Ferndampfsystem nach Anspruch 6, dadurch gekennzeichnet, daß zur weiteren Temperaturanpassung der miteinander gemischten Kondensatströme an die Temperatur in der Kondensatrückführungsleitung (012) ein Wärmetauscher (27) vorgesehen ist, der strömungsmäßig vor der Fördereinrichtung angeordnet ist.

11. Ferndampfsystem nach Anspruch 6, dadurch gekennzeichnet, daß die Mischeinrichtung (24) an eine weitere, durch den aus der Mischeinrichtung (24) austretenden Kondensatstrom angetriebene, zweite Fördereinrichtung angeschlossen ist, durch die ein weiterer Kondensatstrom in die Kondensatrückführungsleitung (012) förderbar ist, und daß der zweiten Fördereinrichtung eine zweite Mischeinrichtung nachgeordnet ist, die die beiden aus der zweiten Fördereinrichtung kommenden Kondensatströme mischt.

**Claims**

1. A method for returning at least two flows of condensed steam of different pressures and different temperatures in a closed circuit of a long-distance steam supply system (1), comprising a high-pressure long-distance steam line (010a), wherein the condensed steam flows are mixed before they enter the condensed steam return line (012) and wherein the pressure and the temperature prevailing in the mixed steam return line is between the pressures and the temperatures of the individual condensed steam flows, characterized in that the condensed steam flow with the lower pressure is fed into the condensed steam return line (012) together with the condensed steam flow the higher pressure.

2. A method in accordance with claim 1, characterized in that a jet pump (24) is used for feeding and mixing.

3. A method in accordance with claim 1, characterized in that the dewatering condensate (11) from the high-pressure long-distance steam supply line (Q10a) collected in a pressure tank (10) is used as transporting condensate.

4. A method in accordance with claim 1, characterized in that the pressure and/or the temperature of the mixed condensed steam flows are further adapted to the pressure and/or the temperature prevailing in the condensed steam return line (012).

5. A method in accordance with claim 1, characterized in that the condensed steam flow obtained after mixing is used for transporting another condensed steam flow of lower pressure.

6. A long-distance steam supply in which at least two condensed steam flows of different pressures and different temperatures are jointly returned in one common steam return line (012), comprising a mixing system (24) in which the condensed steam flows are mixed before they enter the condensed steam return line (012), and a high-pressure long-distance steam supply line (010a). characterized in that the mixing means (24) is connected with transporting means which are driven by the higher-pressure condensed steam flow and which transports the lower-pressure condensed steam flow in the condensed steam return line (012) against the pressure prevailing therein, and that the transported condensed steam flow is mixed in the mixing means (24) with the condensed steam flow emerging from the transporting means.

7. A long-distance steam supply system in accordance with claim 6, characterized in that the transporting and mixing means consist of jet pump (24).

8. A long-distance steam supply system in accordance with claim 7, characterized in that the jet pump (24) is adjustable.

9. A long-distance steam supply system in accordance with claim 6, characterized in that the pressure vessel (10) is connected to the high-pressure long-distance steam supply line (010a) for collecting the dewatering condensate (11) and that the drive means of the transporting system is connected to the said vessel.

10. A long-distance steam supply system in accordance with claim 6, characterized in that for further adaptation of the temperature of the mixed condensed steam flows to the temperature prevailing in the condensed steam return line (012), a heat exchanger (27) is provided upstream of the transporting means.

11. A long-distance steam supply system in accordance with claim 6, characterized in that the mixing system (24) is connected to second transporting means for transporting a further condensed steam flow in the condensed steam return line (012), which second transporting means is driven by the condensed steam flow emerging from the mixing means (24) and followed by second mixing means for mixing the two condensed steam flows emerging from the second transporting means.

**Revendications**

1. Procédé pour le retour d'au moins deux courants de condensat de pression différente et de température différente dans un circuit fermé d'un système de vapeur (1) pour chauffage urbain comportant une conduite de vapeur haute pression (010a), les courants de condensat étant mutuellement mélangés avant l'entrée dans la conduite de retour (012) et la pression et la température dans la conduite de retour se situant entre les pressions et les températures des courants de condensat, caractérisé par le fait que le courant de condensat ayant la plus faible pression est refoulé dans la conduite de retour de condensat (012) avec le courant de condensat ayant la plus forte pression.

2. Procédé selon la revendication 1, caractérisé par le fait que pour le refoulement et le mélange, on utilise un injecteur (24).

3. Procédé selon la revendication 1, caractérisé par le fait que comme condensat de refoulement, on utilise le condensat de drainage (11) provenant de la conduite de vapeur haute pression (010a) et recueilli dans un réservoir sous pression (10).

4. Procédé selon la revendication 1, caractérisé par le fait que la pression et/ou la température des courants de condensat mutuellement mélangés sont en plus adaptés à la pression et/ou à la température régnant dans la conduite de retour de condensat (012).

5. Procédé selon la revendication 1, caractérisé par le fait que le courant de condensat s'établissant après le mélange est utilisé pour refouler un autre courant de condensat de plus faible pression.

6. Système de vapeur pour chauffage urbain avec retour commun d'au moins deux courants de condensat de pression différente et de température différente dans une conduite de retour de condensat commune (012), ainsi qu'avec un dispositif mélangeur (24) dans lequel les courants de condensat sont mélangés avant l'entrée dans la conduite de retour de condensat (012) et avec une conduite de vapeur haute pression (010a), caractérisé par le fait que le dispositif mélangeur (24) est raccordé à un dispositif de refoulement qui est entraîné par le courant de condensat ayant la plus forte pression et qui refoule le courant de condensat ayant la plus faible pression dans la conduite de retour de condensat (012) à l'encontre de la pression qui y règne, et que dans le dispositif mélangeur (24) le courant de condensat refoulé est mélangé au courant de condensat sortant du dispositif de refoulement.

7. Système de vapeur pour chauffage urbain selon la revendication 6, caractérisé par le fait que le dispositif de refoulement et mélangeur est un injecteur (24).

8. Système de vapeur pour chauffage urbain selon la revendication 7, caractérisé par le fait que l'injecteur (24) est réglable.

9. Système de vapeur pour chauffage urbain selon la revendication 6, caractérisé par le fait qu'à la conduite de vapeur haute pression (010a) est raccordé un réservoir sous pression (10) pour recueillir le condensat de drainage (11) et auquel est raccordé le système d'entraînement du dispositif de refoulement.

10. Système de vapeur pour chauffage urbain selon la revendication 6, caractérisé par le fait que pour mieux adapter la température des courants de condensat mutuellement mélangés à la température régnant dans la conduite de retour de condensat (012), il est prévu un échangeur de chaleur (27) qui est installé en amont du dispositif de refoulement vu dans le sens de l'écoulement.

11. Système de vapeur pour chauffage urbain selon la revendication 6, caractérisé par le fait que le dispositif mélangeur (24) est raccordé à un second dispositif de refoulement qui est entraîné par le courant de condensat sortant du dispositif mélangeur (24) et par lequel un autre courant de condensat peut être refoulé dans la conduite de retour de condensat (012), et qu'en aval du second dispositif de refoulement est monté un second dispositif mélangeur qui mélange les deux courants de condensats sortant du second dispositif de refoulement.

1